# EUROPEAN PATENT APPLICATION

(11) **EP 3 088 734 A1**
(43) Date of publication of application: **02.11.2016**
(21) Application number: 15382216.8
(22) Date of filing: 29.04.2015
(51) Int. Cl.: F03D 9/00, B64D 41/00

(54) **DUAL POWER SOURCE AUXILIARY POWER SYSTEM FOR AN AIRCRAFT**

(71) Applicant: Airbus Operations, S.L., 28906 Getafe (Madrid) (ES)
(72) Inventor: RUIZ JIMENEZ, Alfredo, 28906 GETAFE (Madrid) (ES); FERNANDEZ LOPEZ, Pio, 28906 GETAFE (Madrid) (ES); ANDREU FERNANDEZ, Francisco, Manuel, 28906 GETAFE (Madrid) (ES); PULPON BEJAS, David, 28906 GETAFE (Madrid) (ES); CALAHORRO SANCHEZ, Manuel, Miguel, 28906 GETAFE (Madrid) (ES)
(74) Representative: Carpintero Lopez, Francisco

(57) **Abstract**

The present invention refers to an airborne auxiliary power generation system (1) for an aircraft, which can be used to provide additional electric power to the power provided by the primary engines. The auxiliary power system comprises an electric power generator (2), an Auxiliary Power Unit (APU) (3) and a retractable Ram Air Turbine (RAT) propeller device (6), which are alternatively coupled and uncoupled with the electric power generator (2), such as the electric power generator (2) is driven either by the Auxiliary Power Unit (3) or by the RAT propeller device (6). Since a common the electric power generator is provided for two alternatives power sources, the weight and complexity of the auxiliary electrical power generation system is reduced.

## Description

### Object of the invention

The present invention refers to airborne auxiliary power generation systems for an aircraft, which can be used to provide additional electric power to the power provided by the primary engines.

An object of the invention is to provide an auxiliary electrical power generation and distribution system with reduced weight and simplified architecture.

### Background of the invention

Existing commercial transport jet aircraft typically include two or more primary turbine engines for propulsion. These aircrafts, also typically include at least one auxiliary power unit (APU), which is often mounted at the rear of the fuselage to generate auxiliar power in addition to or in lieu of the power provided by the primary engines of the aircraft. Accordingly, APUs can be used to provide power to an aircraft when the primary engines are not running, for example, while the aircraft is waiting at an airport gate. The APUs can also provide temporary power to start the primary engines during normal operations, and/or temporary emergency power during an engine-out condition or other emergency situations.

On the other hand, these commercial transport jet aircrafts typically include a Ram Air Turbine (commonly known by the acronym RAT) usually connected to an electrical generator, to be used as an emergency power source. In case of the loss of both primary and auxiliary power sources, the RAT will power vital systems such as: flight controls, linked hydraulics, and flight-critical instrumentation, generating power from the airstream by ram pressure, due to the speed of the aircraft. In normal conditions the RAT is retracted into the fuselage (or wing), and it is deployed manually or automatically following complete loss of power. During the time between complete power loss and RAT deployment, batteries are used.

The RAT consists of a windmill type propeller deployed outside the aircraft which can drive either an electric generator, an hydraulic pump, or both. Since the system must generate sufficient power at relatively low airspeeds, the drag of the RAT and loads become excessive unless it is stowed within the aircraft during all normal flight.

Nowadays, APU and RAT are completely separated systems located at separate parts of the aircraft. While APU provides auxiliary power, the RAT is used as source of emergency power.

Both systems generate electrical power through respective electrical power generators. The APU uses a gas turbine engine to provide shaft power, and RAT used the air stream due to aircraft relative speed to spin the generator shaft.

### Summary of the invention

The present invention provides an auxiliary power system for an aircraft, comprising two alternative sources of auxiliary power sharing a single electric generator, in such a way that this generator is driven by any one of those power sources.

In particular, the invention provides an airborne auxiliary power system integrating two alternative auxiliary/emergency power sources, wherein those power sources are: an Auxiliary Power Unit (APU) and a propeller device suitable to provide shaft power, arranged to alternatively drive a common electric generator. Preferably, the propeller device is the propeller device of a Ram Air Turbine (RAT).

Therefore, and aspect of the invention refers to an auxiliary power system for an aircraft comprising an electric power generator, an Auxiliary Power Unit (APU) and first mechanical means for alternatively coupling and uncoupling the Auxiliary Power Unit with the electric power generator for driving the same.

The power system further comprises a retractable Ram Air Turbine (RAT) propeller device and second mechanical means for alternatively coupling and uncoupling the RAT propeller device with said electric power generator for driving the same.

The power system additionally includes actuation means operatively associated with said first and second mechanical means, for alternatively coupling an uncoupling the Auxiliary Power Unit and the RAT propeller device with the electric power generator, such as the electric power generator is driven either by the APU or by the RAT propeller device.

Since a common electric power generator is provided for two alternatives auxiliary/emergency power sources, instead of providing a dedicated generator for each power source, the weight and complexity of the auxiliary electrical power generation system of an aircraft is reduced.

Unlike the prior art wherein APU and RAT systems operate separately and are arranged at different locations of an aircraft, in the present invention both APU and RAT systems are integrated as a single system, reducing overall weight of the electrical power generation & distribution systems, as well as simplifying electrical generation and distribution architecture, for example reducing wiring and components.

With respect to the actuation means, these are operated by the retraction or deployment of the Ram Air Turbine propeller device. More specifically, the actuation means are adapted to uncouple the Auxiliary Power Unit from the electric power generator, when the Ram Air Turbine propeller device is deployed (when it moves from the retracted position to the deployed position). The actuation means are further adapted to couple the Auxiliary Power Unit with the electric power generator, when the Ram Air Turbine propeller device is retracted or folded.

The skilled person in art is familiar with different techniques for coupling and uncoupling an APU or a RAT propeller from an electric generator. For example, the first and second mechanical means, may comprise respectively first and second clutch mechanism, for coupling an uncoupling APU or a RAT propeller with a common generator shaft for both power sources.

The actuation means comprises first and second clutch actuation means, respectively associated with the first and second clutch mechanisms for engaging and disengaging the same.

The invention also refers to an aircraft having a rear fuselage section and the auxiliary power system defined in any of the preceding claims, wherein the auxiliary power system is housed inside the aircraft rear fuselage section, and wherein the Ram Air Turbine propeller device is arranged such in a retracted position it is housed within the aircraft rear fuselage section, and in its deployed position it is placed outside said rear fuselage section.

In other preferred implementations of the inventions, for example in the case of military transport aircrafts, the auxiliary power system of the invention is fitted inside a wing root or inside a belly fairing of the aircraft, Ram Air Turbine propeller device can be deployed outside said wing root or belly fairing.

### Brief description of the drawings

Preferred embodiments of the invention, are henceforth described with reference to the accompanying drawings, wherein:
Figure 1.- shows a schematic representation of the auxiliary power system of the invention, wherein the RAT propeller device in its retracted position is represented in broken lines.
Figure 2.- is another representation of the auxiliary power system of the invention, schematically representing the first and second clutch mechanism, and the actuation means.

### Preferred embodiment of the invention

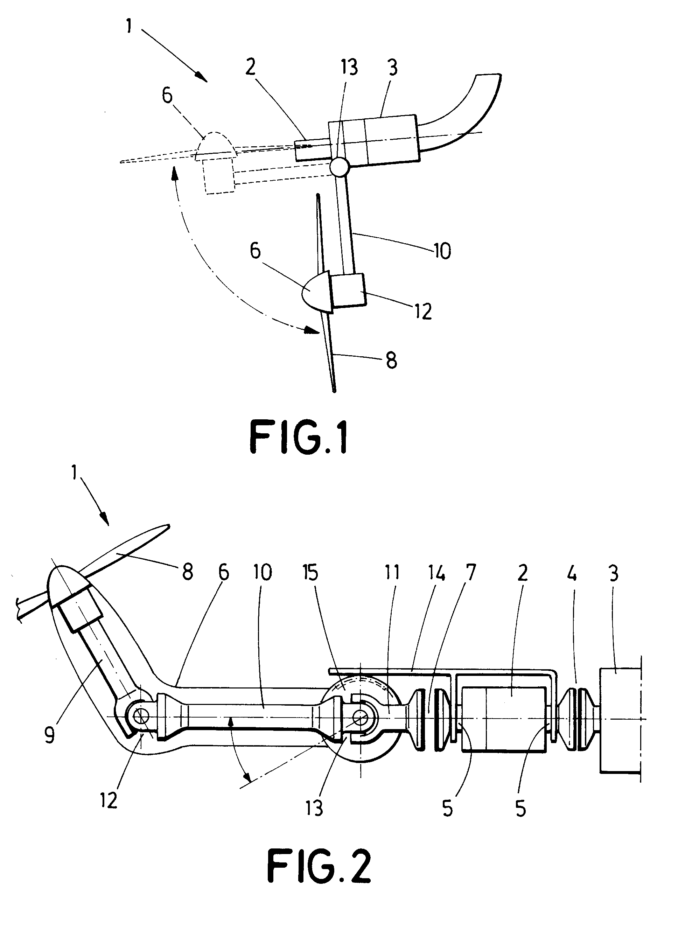

Figures 1 and 2 show exemplary embodiments of the auxiliary power system (1) of the invention, which comprises a single electric power generator (2) having a generator shaft (5), and an Auxiliary Power Unit (APU) (3) which can be coupled and uncoupled from the electric power generator (2) through first mechanical means, which in this case are based on a first clutch mechanism (4) coupled for example with one of the ends of the electric generator shaft (5). Typically the Auxiliary Power Unit (3) comprises a gas turbine and a gearbox (not shown) coupled with the gas turbine, such as the Auxiliary Power Unit (3) is coupled with the first clutch mechanism through its gearbox.

On the other hand, a retractable propeller device preferably a Ram Air Turbine (RAT) propeller device (6), can be coupled and uncoupled from the electric power generator (2) through second mechanical means, which are also based on a second clutch mechanism (7) coupled for example with the other ends of the electric generator shaft (5).

In other preferred embodiments of the invention, the Auxiliary Power Unit (APU) (3) and the Ram Air Turbine (RAT) propeller device (6) are coupled with other parts of the electric generator shaft (5) different than its ends. For example, in an alternative embodiment of the invention (not represented), the APU and RAT device are connected to the same end or part of the electric generator shaft (5) through a common gear box.

The RAT propeller device (6) has a two blades variable pitch propeller (8) configured as a windmill propeller, mounted on a fist rotating shaft (9) which is mechanically coupled at one end of a second rotating shaft (10) for example by means of a first universal joint (12), and a third rotating shaft (11) mechanically coupled at the other end of the second rotating shaft (10) for example by means of a second universal joint (13). Preferably, the first and second universal joints (12,13) are cardan joints.

In the retracted or folded state, the RAT propeller device (6) is housed inside an aircraft fuselage (not shown) and it is arranged in the position shown in figure 2. For its deploying, the RAT propeller device (6) is pivoted about the second universal joint (13) until it reaches the deployed position shown in figure 1.

The third rotating shaft (11) is joined to the second clutch mechanism (7), such as the rotation or shaft power generated by the propeller (8) in its deployed state (figure 1) is transmitted to the generator (2) through the first, second and third rotating shafts (9,10,11) and the second clutch mechanism (7).

Actuation means (14) are provided for operating the first and second clutch mechanism (4,7) for alternatively coupling an uncoupling the APU (3) and the RAT propeller device (6) with the electric power generator (2). This actuation means (14) comprises first and second clutch actuation means, respectively associated with the first and second clutch mechanisms (4,7) for engaging and disengaging the same, and wherein the actuation means are operatively associated with the Ram Air Turbine propeller device, such the first and second clutch actuation means are operated by the retraction or deployment movement of the RAT propeller device.

This function can be implemented in different ways. For example, in the embodiment of figure 2 a toothed wheel (15) is joined to the second end of the second rotating shaft (10), and at the same time this toothed wheel (15) is engaged with an arm of the actuation means (14).

When the propeller device (6) pivots from its retracted state to its deployed state, the toothed wheel (15) turns anti-clockwise, and the actuations means (14) are displaced to the left such as the first clutch mechanisms (4) is disengaged (the two plates of the same are uncoupled), and the second clutch mechanisms (7) is engaged (the two plates of the same are coupled). The inverse process is followed when the propeller device (6) is retracted.

In this way, the actuation means are adapted to uncouple the Auxiliary Power Unit (3) from the electric power generator (2) when the Ram Air Turbine propeller device is deployed, and to couple the Auxiliary Power Unit (3) with the electric power generator (2), when the Ram Air Turbine propeller device (6) is retracted.

In other preferred embodiments of the invention, other type of known actuation means can be selected for operating the first and second clutch mechanism (4,7). The is a large number of clutch mechanism and associated clutch actuation means already known in the state of the art, for example: mechanic, hydraulic, electro-mechanic etc. The skilled person is familiar with the use and design of these devices, and it would be a routine task for the skilled person to provide first and second clutch mechanism for alternatively coupling an uncoupling the APU (3) and the RAT propeller device (6) with the electric power generator (2).

Other preferred embodiments of the present invention are described in the appended dependent claims and the multiple combinations threreof.

## Claims

1. Auxiliary power system for an aircraft, comprising:
an electric power generator,
an Auxiliary Power Unit (APU), and first mechanical means for coupling and uncoupling the Auxiliary Power Unit with the electric power generator for driving the same,
a retractable propeller device, and second mechanical means for coupling and uncoupling the propeller device with said electric power generator for driving the same,
actuation means operatively associated with the first and second mechanical means, for alternatively coupling an uncoupling the Auxiliary Power Unit and the propeller device with the electric power generator.

2. Auxiliary power system according to claim 1 wherein the actuation means are adapted to uncouple the Auxiliary Power Unit from the electric power generator, when the propeller device is deployed.

3. Auxiliary power system according to claim 1 or 2 wherein the actuation means are further adapted to couple the Auxiliary Power Unit with the electric power generator, when the propeller device is retracted.

4. Auxiliary power system according to any of the preceding claims, wherein the electric power generator has a generator shaft, and wherein the first and second mechanical means comprise respectively first and second clutch mechanism, and wherein the first clutch mechanism is coupled with a part of the generator shaft and the second clutch mechanism is coupled with another part of the generator shaft.

5. Auxiliary power system according to any of the preceding claims, wherein the actuation means comprises first and second clutch actuation means, respectively associated with the first and second clutch mechanisms for engaging and disengaging the same, and wherein the actuation means are operatively associated with the propeller device, such the first and second clutch actuation means are operated by the retraction or deployment of the propeller device.

6. Auxiliary power system according to any of the preceding claims, wherein the Auxiliary Power Unit comprises a gas turbine and a gearbox coupled with the gas turbine, and wherein the Auxiliary Power Unit is coupled with the first clutch mechanism through its gearbox.

7. Auxiliary power system according to any of the preceding claims, wherein the propeller device is the propeller device of a Ram Air Turbine (RAT).

8. Aircraft including the auxiliary power system defined in any of the preceding claims, wherein the auxiliary power system is housed inside the aircraft rear fuselage section, or inside a wing root or inside a belly fairing, and wherein the propeller device is arranged such in a retracted position it is housed within the aircraft, and in its deployed position it is placed outside the aircraft..
